# FASCICULE DE BREVET EUROPEEN

(11) **EP 2 481 658 B1**
(45) Date de publication et mention de la délivrance du brevet: **08.05.2013**
(21) Numéro de dépôt: 11159790.2
(22) Date de dépôt: 25.03.2011
(51) Int. Cl.: B62K 3/06, B62M 6/65

(54) **CADRE DE VELO**
FAHRRADRAHMEN
BICYCLE FRAME

(30) Priorité: 01.04.2010 FR 1052489
(43) Date de publication de la demande: 01.08.2012
(73) Titulaire: MATRA MANUFACTURING & SERVICES, 75016 Paris (FR)
(72) Inventeur: Duvivier, Mickael, 92320 Chatillon (FR)
(74) Mandataire: Cabinet Plasseraud

(56) Documents cités:
- DE-A1- 2 166 756
- DE-A1- 3 001 047
- DE-A1- 3 211 383
- DE-A1- 3 244 466
- DE-U- 1 772 869
- FR-A- 1 071 281
- US-A- 4 427 209

## Description

La présente invention vise en particulier un cadre de vélo. Avec le cadre selon l'invention, la transmission de l'effort entre le plateau du pédalier et le pignon de la roue arrière peut être assurée par une courroie, et peut notamment mais non exclusivement être utilisé pour un vélo à assistance électrique.

Plus particulièrement, le cadre de vélo comprend :
- un premier élément de cadre s'étendant depuis une extrémité supérieure portant un boîtier de pivotement d'une roue avant jusqu'à une extrémité inférieure ;
- un deuxième élément de cadre s'étendant depuis une extrémité supérieure recevant un ensemble de selle jusqu'à une extrémité inférieure solidaire de l'extrémité inférieure du premier élément de cadre ;
- une fourche de roue arrière comprenant au moins un élément de base latéral s'étendant depuis l'extrémité inférieure du premier élément de cadre jusqu'à un support d'axe d'une roue arrière et un hauban s'étendant dudit support jusqu'au deuxième élément de cadre ;
- un pédalier présentant un axe de pédalier porté par le cadre et un plateau d'entraînement agencé latéralement à l'extérieur par rapport aux premier et deuxième éléments de cadre .

Ce type de cadre, notamment au niveau de la fourche arrière est très classique pour les deux-roues de type vélo et ses avantages en terme de solidité, rigidité et légèreté sont démontrés. Une telle structure avec un plateau extérieur et un pignon intérieur par rapport au triangle formé par le deuxième élément de cadre, l'élément de base et le hauban, ne posent aucun problème avec une transmission par chaîne. En effet, la chaîne peut être facilement ouverte en dérivant un maillon pour entourer l'élément de base et être refermée pour former une boucle autour de cet élément.

Les transmissions par courroie présentent certains avantages par rapport aux transmissions à chaînes, comme une quasi-absence d'entretien et un grand silence de fonctionnement. L'intégration d'un système de changement de vitesse avec une transmission par courroie présente des difficultés, même si cela n'est pas totalement exclus notamment à l'aide d'un système de changement de vitesse intégré au moyeu de la roue. En effet, les systèmes à pignons multiples et dérailleur à galet tendeur sont très difficilement adaptables à une transmission par courroie.

L'inventeur a toutefois constaté qu'avec les vélos à assistance électrique, le fait de disposer de multiples vitesses n'était plus aussi indispensable qu'avec des vélos classiques, du moins pour une utilisation urbaine. Les derniers systèmes d'assistance électrique sont suffisamment performants lors des phases de démarrage pour que l'utilisateur n'ait plus à sélectionner une vitesse à développement réduit pour obtenir un démarrage suffisamment vif.

L'utilisation des transmissions à courroie est largement connue dans le domaine des motos, mais l'architecture de ce type de deux-roues est sensiblement différente et ne pose pas les mêmes problèmes. La roue arrière est alors le plus souvent portée par une paire de bras articulés à l'extrémité desquels des éléments de suspension sont reliés de manière démontable, ce qui permet de faire passer une courroie. Il est aussi possible de disposer le pignon d'entraînement à l'extérieur de ces bras, ce qui n'est pas gênant pour une moto étant donné l'encombrement latéral de ce type de véhicule, mais qui constituerait une partie nettement saillante et potentiellement dangereuse pour un vélo.

Quelques deux-roues présentant un cadre classique de vélo avec une transmission par courroie sont connus, comme par exemple du document US20090236819. Mais alors il est prévu que la patte recevant l'axe de la roue est fixée de manière démontable à l'extrémité arrière de l'élément de base et à l'extrémité inférieure du hauban. Ceci permet de créer une ouverture à travers laquelle la courroie peut passer. De la même façon, selon FR 1071281, DE1772869 ou DE324466, il est prévu une possibilité de démonter le cadre, par exemple pour échanger la courroie ou pour un autre motif. De tels systèmes à patte ou élément démontable augmentent à la complexité du cadre, mais peuvent aussi poser des problèmes de fiabilité et de résistance structurelle, sans parler de l'apparition de bruits si la patte n'est pas parfaitement immobilisée.

Il existe donc un besoin pour obtenir une réalisation concrète d'un deux-roues comprenant un cadre de type vélo avec les qualités attendues de ce type de cadre, mais qui puisse bénéficier des avantages d'une transmission à courroie sans avoir les inconvénients liés au montage de celle-ci.

A cet effet la présente invention a pour objet un cadre de vélo tel que défini dans la revendication 1, dans lequel l'élément de base présente une majeure portion agencée sous une droite s'étendant de l'extrémité inférieure du plateau à l'extrémité inférieure du pignon, le triangle triangle formé par le deuxième élément de cadre, l'élément de base et le hauban, forme un ensemble rigide indémontable, et l'axe du pédalier est situé à une distance verticale de la face supérieure de l'élément de base du premier élément de cadre à l'aplomb de cet axe, ladite distance étant au plus légèrement supérieure au rayon du plateau.

Grâce à ces dispositions, la courroie passe entièrement à travers le triangle de la fourche arrière pour venir en prise avec le pignon intérieur et aucun élément du cadre ne doit être démonté lors de la mise en place ou du changement de la courroie. Pour que la majeure portion de l'élément de base soit disposée sous la courroie, c'est-à-dire agencée à une position sensiblement plus basse par rapport aux éléments de base traditionnels s'étendant du boîtier du pédalier jusqu'au support de roue arrière, il est nécessaire que cet élément ou l'un des deux éléments de cadre, présente une longueur développée un peu plus importante que celle traditionnellement utilisée. Ceci va à l'encontre d'une économie de matière pour le cadre, mais il s'avère que cet inconvénient est très léger et tout à fait acceptable au vu des avantages obtenus avec une transmission simplifiée par courroie. Cette disposition de la courroie au-dessus de l'élément de base a aussi pour avantage d'éviter des contacts de celle-ci avec d'éventuels obstacles. De plus, la position peu habituelle du boîtier de pédalier et de l'axe du pédalier permet d'abaisser l'extrémité avant de l'élément de base, ce qui permet d'assurer une absence de contact avec la transmission par courroie, mais aussi la compatibilité avec une transmission usuelle par chaîne.

Dans des modes de réalisation préférés de l'invention, on a recours en outre à l'une ou l'autre des dispositions suivantes :
La majeure portion de l'élément de base s'étend depuis une extrémité avant de celui-ci qui est relié à l'un des deux éléments de cadre, sur une distance représentant 60 % à 80 % de la longueur totale développée dudit élément de base. Cette disposition permet d'éviter un contact de la courroie avec l'élément de base malgré une certaine variation de diamètre du pignon arrière, mais aussi qu'une portion arrière de l'élément de base adjacente au support d'axe soit située relativement haut afin de dégager de l'espace sous celle-ci et de permettre le montage d'une transmission classique par chaîne comme cela apparaîtra ci-après.
La majeure portion de l'élément de base est sensiblement rectiligne depuis l'extrémité avant de celui-ci et est complétée jusqu'à l'extrémité arrière dudit élément de base par une portion complémentaire courbe. Ceci afin de conserver une forme relativement simple pour l'élément de base et faciliter sa fabrication.
La majeure portion de l'élément de base s'étend dans un plan incliné d'un angle α compris entre 9° et 15° par rapport à l'horizontale et de préférence d'environ 12°. Cet angle α, relativement prononcé par rapport aux cadres usuels, offre un compromis particulièrement satisfaisant entre la nécessité du passage de la courroie, la possibilité du montage d'une transmission par chaîne classique et la quantité de matière nécessaire pour le cadre.

L'élément de base comprend une portion complémentaire s'étendant depuis le support de roue jusqu'à la majeure portion qui présente des extrémités alignées sur une droite formant un angle β de 30° à 45° avec l'horizontale et de préférence d'environ 40°. Il est bien entendu possible de prévoir un angle β sensiblement supérieur à 45° pour dégager un maximum d'espace pour la courroie au-dessus de l'élément de base. Toutefois, ces valeurs préférentielles s'avèrent avantageuses en termes de quantité de matière nécessaire et pour permettre le montage transmission usuelle à chaîne.

L'élément de base est relié à l'extrémité inférieure du premier élément de cadre, ladite extrémité étant située à une distance du sol comprise entre 12 cm et à 20 cm. L'extrémité avant de l'élément de base est ainsi située à un niveau bien inférieur au niveau habituel, mais la garde au sol se révèle toutefois suffisante.

L'axe du pédalier est porté par un boîtier solidaire du deuxième élément de cadre. Cette disposition permet de limiter la matière nécessaire pour le cadre.

La présente invention se rapporte à un cadre de vélo présentant une ou plusieurs des dispositions précédentes, pour lequel la fourche arrière est adapté pour recevoir une roue présentant des pignons multiples, un dérailleur à galet tendeur et une chaîne présentant un brin retour passant à travers le triangle de cette fourche et un brin aller s'étendant sous l'élément de base quelle que soit la position du dérailleur. On obtient ainsi un même cadre qui est compatible avec une transmission à courroie et une transmission par chaîne usuelle, c'est-à-dire avec des vitesses multiples sélectionnées par un dérailleur. Ceci présente un avantage industriel significatif, tant sur les coûts et la gestion de la fabrication du cadre, mais aussi de l'ensemble des accessoires qui sont alors identiques pour toute une gamme de deux-roues comprenant des vélos à assistance électrique mono vitesse à courroie, à vitesses multiples grâce à un ensemble de transmission à dérailleur standard, voire à des modèles à vitesses multiples sans assistance.

Diverses géométries de l'élément de base peuvent permettre cette compatibilité du cadre pour les transmissions par courroie et par chaîne à vitesses multiples. Cela nécessite toutefois un ajustement précis des valeurs géométriques. Chacune des dispositions indiquées ci-dessus facilitent cet ajustement, et offrent l'avantage d'une forme simple de l'élément de base pour ne pas complexifier la fabrication.

D'autres caractéristiques et avantages de l'invention apparaîtront au cours de la description qui va suivre, donnée à titre d'exemple non limitatif, au regard des figures dans lesquelles :
- la figure 1 est une vue de côté d'un deux-roues selon l'invention présentant une transmission par courroie ;
- la figure 2 est une vue en perspective du cadre du deux-roues de la figure 1 ;
- la figure 3a est une vue partielle agrandie de la figure 1, la figure 3b étant une vue analogue de la précédente pour laquelle la transmission par courroie a été remplacée par une transmission par chaîne ;
- la figure 4a est une vue partielle agrandie de l'arrière de la figure 1, la figure 4b est une vue analogue pour laquelle la transmission par courroie a été remplacée par une transmission par chaîne ; et
- la figure 5a est une vue partielle agrandie de dessus de la figure 1, la figure 5b étant une vue analogue pour laquelle la transmission par courroie a été remplacée par une transmission par chaîne.

Sur les différentes figures, des éléments identiques ou similaires sont indiqués par les mêmes références.

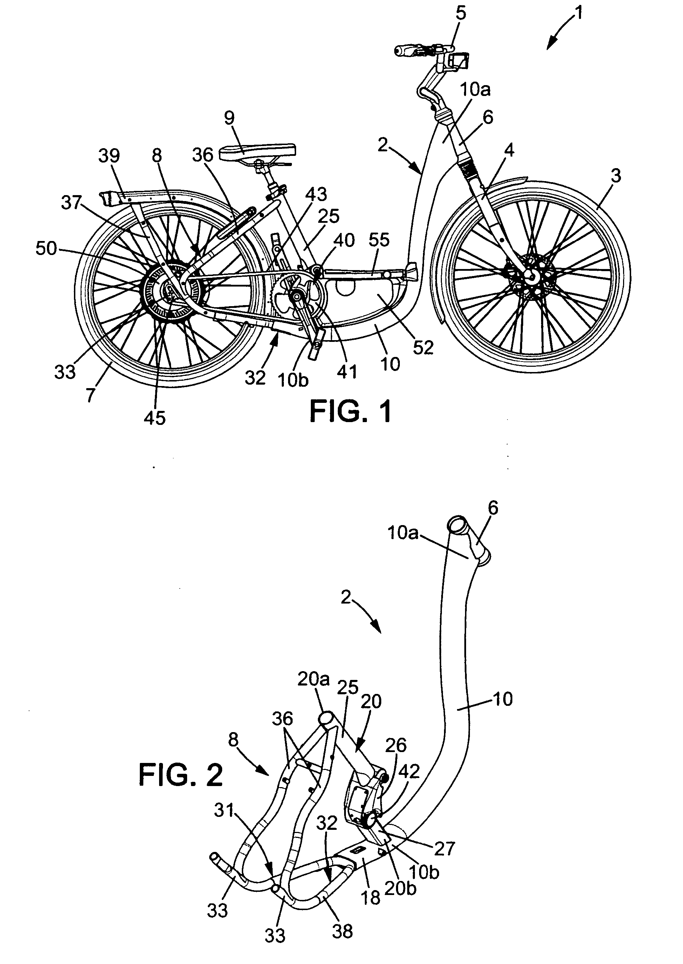

A la figure 1, est représenté un deux-roues 1 de type vélo de ville à cadre 2 ouvert.

Le vélo 1 comprend de manière bien connue une roue avant 3 portée par une fourche 4 solidaire d'un ensemble de guidon 5. La fourche 4 est montée pivotante à travers un boîtier de pivotement 6, ou boîtier de direction, solidaire du cadre 2. Le vélo 1 comprend également une roue arrière 7 portée par une fourche arrière 8 solidaire du cadre 2, ainsi qu'un ensemble de selle 9.

Le vélo 1 est un vélo à assistance électrique de pédalage. On comprendra toutefois de la suite de la description qu'il pourrait s'agir d'un type de deux-roues quelque peu différent (par exemple de type scooter ou moto légère à propulsion électrique), du moment que certaines caractéristiques du cadre 2 et de la fourche arrière 8 sont conservées.

La cadre 2 comprend un premier élément de cadre 10 s'étendant depuis une extrémité supérieure 10a solidaire du boîtier de pivotement 6, jusqu'à une extrémité inférieure 10b. Le premier élément de cadre 10 correspond sensiblement à la pièce appelée "tube diagonal" dans le domaine des vélos. Il est en effet formé à partir d'un tube, mais auquel on fait subir des transformations de sorte qu'il présente des variations de section et des portions plus ou moins courbées. Des éléments additionnels sont également rapportés par soudage. Ce premier élément de cadre 10 pourrait toutefois être réalisé à partir de plusieurs éléments assemblés ou encore comporter des éléments pleins.

Dans le mode de réalisation représenté, une portion supplémentaire 18 de la pièce formant le premier élément de cadre 10 s'étend au-delà de l'extrémité inférieure 10b. Cette fabrication est avantageuse en termes de rigidité, mais ne change rien à la définition géométrique des éléments du cadre 2 et de la fourche arrière 8.

Le cadre 2 comporte un deuxième élément de cadre 20 s'étendant depuis une extrémité supérieure 20a sur laquelle est montée l'ensemble de selle 9 comprenant un tube de selle, des moyens de réglage et la selle proprement dite, jusqu'à une extrémité inférieure 20b. Cette extrémité 20b est solidaire de l'extrémité inférieure 10b du premier élément de cadre 10, de sorte que ces extrémités (10b, 20b) peuvent être géométriquement confondues.

Le deuxième élément de cadre 20 présente une portion supérieure 25 ici formée par un tube rectiligne. Par contre, la portion inférieure est formée de deux pièces (26, 27) relativement complexes qui forment un ensemble rigide indémontable avec le reste du cadre 2.

La fourche arrière 8 comprend de manière habituelle une paire d'éléments de base (31, 32) s'étendant de part et d'autre de la roue arrière 7 depuis l'extrémité inférieure 10b du premier élément de cadre jusqu'à un support d'axe 33 de la roue arrière.

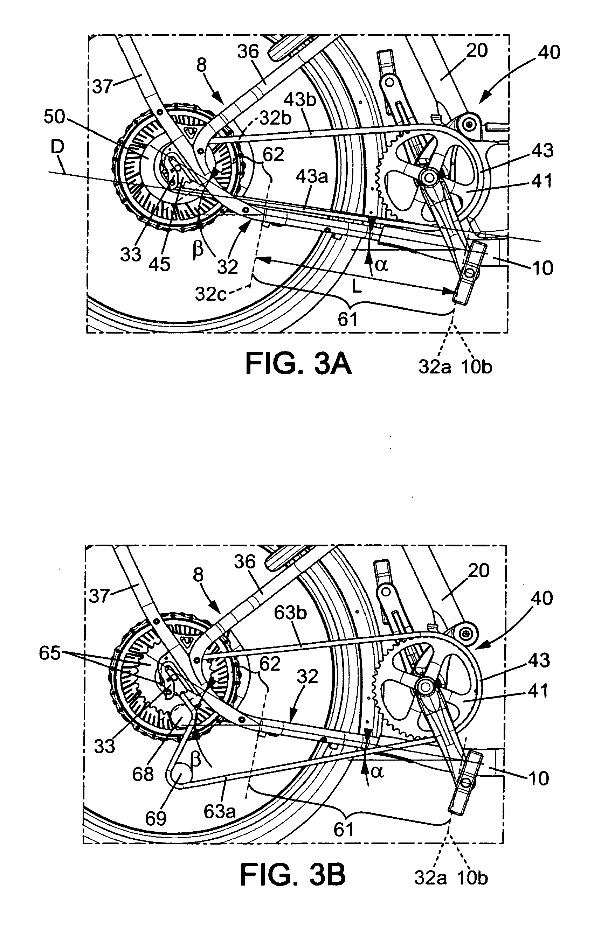

Chacun des éléments de base gauche 31 et droit 32 est en partie formés par la portion supplémentaire 18 dans leur partie avant qui est donc commune pour les deux éléments. Leurs portions arrière sont formées dans le mode de réalisation représenté par un même tube 35 indiqué à la figure 2 qui est recourbée en U autour de la roue arrière 7. On comprendra bien qu'il s'agit d'un mode de fabrication particulier pouvant présenter des avantages en termes de simplification de fabrication et de rigidité. Cela n'affecte toutefois en rien la définition géométrique de ces éléments de base (31, 32) qui doivent s'étendre entre le point de jonction des premier et deuxième éléments de cadre (10, 20) et les supports d'axe 33. I1 pourrait s'agir de tubes distincts soudés à leurs extrémités géométriques avant 32a et arrière 32b indiquées par des traits discontinus aux figures 3. Ceci sous réserve toutefois que ces tubes présentent les formes et soient agencés selon les précisions indiquées ci-après. La fourche arrière 8 comprend également une paire de hauban 36 s'étendant du support d'axe 33 au deuxième élément de cadre 20 et plus particulièrement à proximité de l'extrémité supérieure 20a de celui-ci.

La fourche arrière 8 forme ainsi un ensemble rigide et léger capable de maintenir la roue arrière 7 dans un plan vertical aligné avec le plan vertical du cadre 2.

La partie arrière du vélo comprend également un garde-boue 39 supporté par une paire de haubans supplémentaires 37 qui sont ici solidaires du cadre, mais qui pourraient être bien entendu des éléments rapportés.

Les premier et deuxième éléments 10, 20 forment avec la fourche arrière 8 le cadre 2 du vélo 1, tel que représenté à la figure 2, les haubans supplémentaires 39 étant facultatifs.

S'agissant d'un vélo, celui-ci comprend un ensemble de transmission comprenant un pédalier 40 porté par un boîtier 42 visible à la figure 2, un organe de transmission constitué par une courroie 43, pour le mode de réalisation des figures 1, 3A, 4A et 5A, et un pignon arrière 45. Le vélo comprend également un système de propulsion électrique dans le mode de réalisation.

Il s'agit d'un système d'assistance au pédalage, c'est-à-dire qui fonctionne de manière automatique, notamment en fonction de l'effort de pédalage exercé. Il pourrait toutefois s'agir d'un système dont la force de propulsion électrique est directement commandée par l'utilisateur.

Le système de propulsion comprend un moteur électrique 50 logé dans le moyeu de la roue arrière 7, une batterie électrique logée dans un boîtier de batterie 52 et une liaison par câble entre la batterie et le moteur. Un module de commande et d'affichage, non visible, est également prévu sur l'ensemble de guidon 5. Il permet de mettre en service l'assistance électrique selon différents modes et d'afficher des paramètres de fonctionnement ou l'état de charge de la batterie.

Afin d'optimiser l'agencement de la batterie 1 dans le vélo, un espace de logement de batterie est défini dans le cadre 2 par la portion inférieure du premier élément de cadre 10, la portion inférieure du deuxième élément de cadre 20 et un ensemble de marchepied 55 qui s'étend entre le premier élément de cadre 10, et le deuxième élément de cadre 20.

La transmission par courroie est très peu utilisée dans le domaine des vélos, premièrement du fait qu'elle ne permet pas d'utiliser un système de changement de vitesse à pignons multiples et dérailleur. Deuxièmement, parce que le montage d'une courroie entre le pédalier 41 et le pignon arrière 45 pose un problème avec les cadres usuels.

En effet, il faut bien comprendre que le terme courroie désigne un élément formant une boucle continue et indémontable. La courroie 43 est en élastomère armé de fibres de renfort et ne présente aucun moyen d'ouverture pour des raisons de facilité de fabrication, de résistance à la traction et de silence de fonctionnement. Il peut présenter toutes sections connues, notamment une section trapézoïdale avec des surfaces intérieures et latérales lisses. On préférera toutefois une courroie crantée de section relativement plate avec des crans arrondis sur sa face intérieure qui a l'avantage de ne pas nécessiter une tension de fonctionnement importante.

Concernant le premier inconvénient, l'inventeur a toutefois constaté qu'avec un vélo à assistance électrique était bien moins nécessaire de disposer de multiples vitesses. L'assistance lors de la phase de démarrage avec les derniers moteurs, en particulier ceux intégrés au moyeu d'une roue, fournit un couple suffisamment élevé pour obtenir un démarrage vif, et ce malgré la très faible vitesse de rotation d'un moteur en prise direct avec l'axe de la roue.

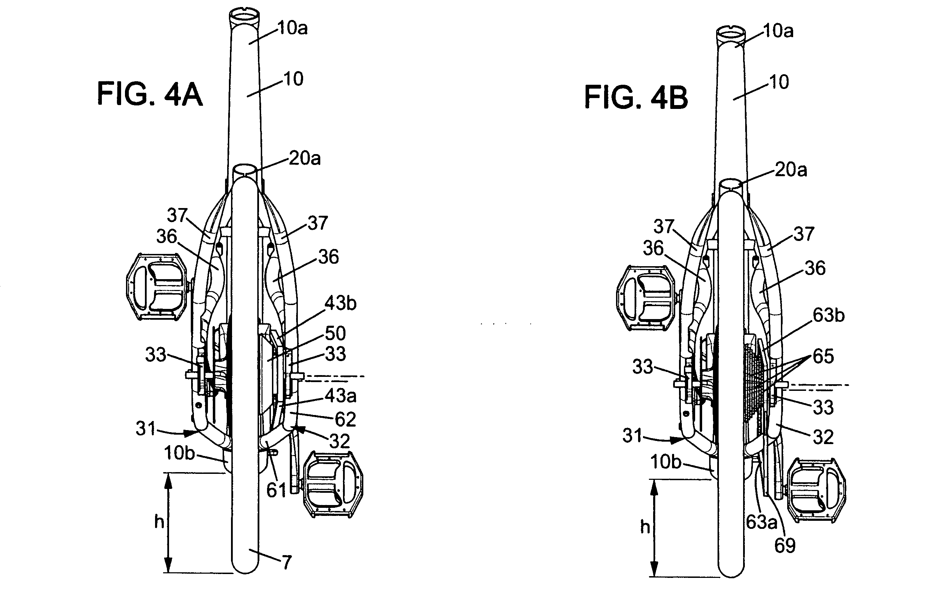

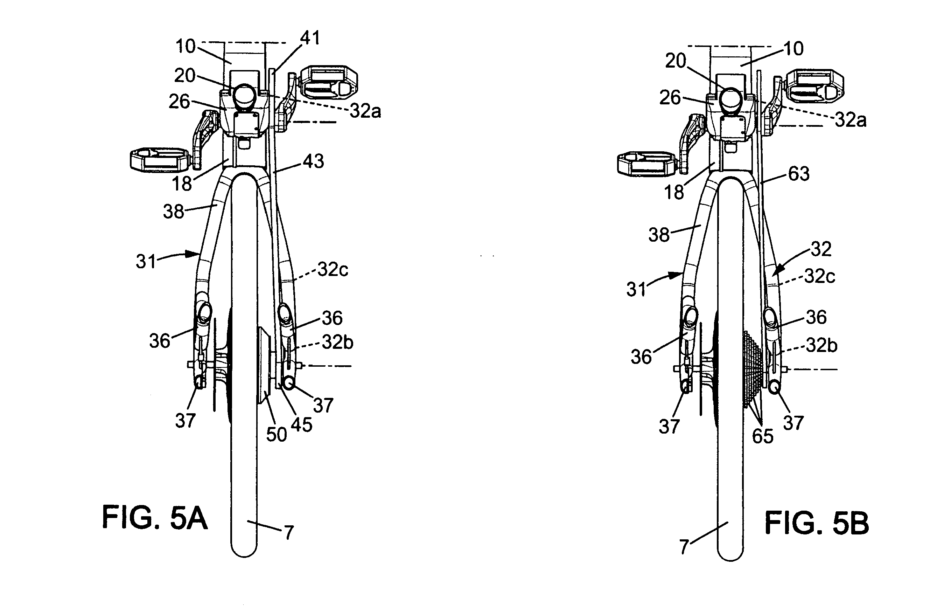

Afin de résoudre le problème de montage de la courroie, on prévoit que l'élément de base droit 32, c'est-à-dire situé du côté du plateau 41 et du pignon 45, présente une majeure portion 61 indiquée aux figures 3, qui est agencée pour s'étendre sous une droite D définie par l'extrémité inférieure du plateau 41 et l'extrémité inférieure du pignon 45. La courroie 43 est disposée entre ces organes d'entraînement (41, 45) en passant à travers le triangle continu formé par l'élément de base 32, le hauban 36 et le deuxième élément de cadre 20, c'est-à-dire avec le brin aller 43a qui passe un peu au-dessus et à faible distance et sensiblement parallèlement par rapport à la majeure portion 61 de l'élément de base 32, comme cela est aussi visible aux figures 4a et 5a. Il est bien entendu nécessaire de prévoir un certain espacement entre la droite D, et plus généralement le plan défini par cette droite D et une droite horizontale perpendiculaire à celle-ci, de sorte que la face inférieure du brin aller 43a soit située un peu au dessus de cette surface, et ne vient pas en contact avec l'élément de base 32.

Différentes géométries de l'élément de base 32 et plus généralement de la fourche arrière 8 du cadre 2 sont possibles pour réaliser cette caractéristique. Il faut toutefois tenir compte de l'ensemble des éléments du vélo et du positionnement imposé pour certains d'entre eux, mais aussi de l'impact sur le coût de fabrication et sur les caractéristiques de rigidité et de solidité.

Avec ces contraintes, il apparaît préférable que la majeure portion 61 de l'élément de base s'étende depuis l'extrémité avant 32a de celui-ci, c'est-à-dire depuis son point de liaison avec les extrémités inférieures (10b, 20b) des éléments de cadre. Il est tout à fait envisageable de prévoir un élément de base qui présente à son extrémité avant une portion courbée afin d'abaisser la hauteur d'une majeure portion située à distance de celle-ci. Mais le mode de réalisation représenté s'avère préférable en termes de solidité, d'économie de matière et particulièrement avantageux en réalisant une partie de la majeure portion 61 par la portion supplémentaire 18 intégralement formée avec le premier élément de cadre 10.

On notera que la portion inférieure du premier élément de cadre 10 n'est pas rectiligne comme cela est habituel pour un tube diagonal, mais présente une forme courbe avec une cavité orientée vers le haut et vers l'arrière, approximativement en direction de l'ensemble de selle 9. Ainsi, la portion inférieure est globalement située plus en avant par rapport à la portion correspondante d'un tube diagonal habituel.

La portion inférieure du deuxième élément de cadre 20 présente elle aussi une courbure de concavité orientée vers l'avant. Ces courbures augmentent l'espace pour le boîtier de batterie 52.

Par contre, pour le premier élément de cadre 10, il est préférable de le réaliser en une seule pièce et sans angle prononcé, surtout s'il s'agit d'un cadre ouvert comme dans le mode de réalisation représenté.

Le fait de placer le boîtier de pédalier 42 sur la portion inférieure du deuxième élément de cadre 20, et non pas à la jonction avec le premier élément, permet d'abaisser l'extrémité inférieure 10b du premier élément de cadre et d'augmenter encore l'espace 60 pour loger le boîtier de batterie. En effet, la position du boîtier de pédalier 42 ne peut être modifiée verticalement que de quelques dizaines de millimètres autour d'une hauteur d'environ 27 cm qui est considérée comme un optimum entre le confort de pédalage et le risque que les pédales touchent le sol en virage.

La majeure portion 61 de l'élément de base 32 représente, comme son nom l'indique, la plus grande partie de cet élément de base. Plus précisément, elle s'étend sur une distance représentant 60 à 80% de la longueur totale développée, c'est-à-dire en tenant compte de la ou des courbures de cet élément. Ceci s'avère préférable pour que l'élément de base 32, bien que situé à une position inférieure par rapport aux éléments de base traditionnels, reste proche de la courroie et autorise tout de même certaines variations de la position latérale et du diamètre du plateau 41 et du pignon 45.

Dans ce but, mais aussi par souci de solidité, la majeure portion 61 de l'élément de base est sensiblement rectiligne. Il est toutefois parfaitement possible de prévoir des zones courbées dans cette portion, comme par exemple pour les haubans 36 pour former une zone resserrée autour de la roue.

Comme indiqué aux figures 3, la majeure portion 61 a une direction, définie par le milieu de ses extrémités ici l'extrémité avant 32a de l'élément de base et une section intermédiaire 32c, qui est inclinée par rapport à l'horizontal de sorte que son extrémité arrière 32c soit plus haute. L'angle α formé par cette direction avec l'horizontal est compris entre 9 et 15 degrés, et est par exemple d'environ 12 degrés comme dans le mode de réalisation représenté.

La majeure portion 61 est suivie d'une portion complémentaire 62 pour compléter l'élément de base 32 de la section intermédiaire 32c jusqu'à son extrémité arrière 32b. Cette portion complémentaire 62 forme un angle avec la majeure portion 61 pour rattraper le niveau du support d'axe 33. Elle présente une direction définie par le milieu de ses sections d'extrémité (32c, 32b), qui forme un angle β de 30 à 45 degrés avec l'horizontal, et est d'environ 40 degrés dans le mode de réalisation préféré représenté. Il est possible de prévoir une portion complémentaire formant un angle plus important dans le but d'abaisser la majeure portion 61 et de s'assurer ainsi un écart important entre la courroie et l'élément de base 32. Mais les valeurs indiquées préférables, ainsi que le fait que cette portion complémentaire 62 soit courbe, pour ménager un espace qui reste libre sous l'élément de base 32 en particulier à proximité de son extrémité arrière 32b, qui est habituellement occupée par un changement de vitesse à dérailleur.

Comme on l'a vu, l'extrémité avant 32a de l'élément de base est reliée à l'extrémité inférieure 10b du premier élément de cadre et est même constituée par un prolongement de la pièce formant cet élément de cadre. Pour assurer une position sensiblement plus basse de l'élément de base, l'extrémité inférieure 10b de ce premier élément de cadre est donc situé bien plus bas que de son cadre traditionnel, ce qui a l'avantage de dégager de l'espace pour le passage des jambes ou pour loger le boîtier de batterie 52. Toutefois, il apparaît important que la face inférieure du premier élément de cadre 10 ne soit pas située à une distance du sol, indiquée par la lettre h aux figures 4, qui est inférieure à une certaine valeur. Cette valeur a été déterminée à 12 cm pour une utilisation en ville afin d'éviter les chocs avec trottoirs et autres obstacles. Dans le mode de réalisation, cette hauteur h est de 13,5 cm. Elle ne devrait toutefois pas être supérieure à 20 cm pour permettre le passage de la courroie sous une majeure portion 61 sensiblement rectiligne.

Le boîtier 42 visible à la figure 2 est solidaire du deuxième élément de cadre 20 à distance de l'extrémité inférieure 10b du premier élément de cadre, et plus précisément dans le mode de réalisation représenté à la jonction des pièces 26 et 27 qui forment une portion coudée de concavité orientée vers l'avant. Cette distance verticale entre l'axe du pédalier 40 et la face supérieure de l'élément de base 32 à l'aplomb de cet axe, est de préférence légèrement supérieure au rayon du plateau 41.

Ainsi, cette position du boîtier de pédalier et de l'axe du pédalier 40 permet d'abaisser l'extrémité avant de l'élément de base 32, ce qui permet d'assurer une absence de contact avec la transmission par courroie, mais aussi la compatibilité avec une transmission usuelle par chaîne et ceci en conservant une position relativement basse du pédalier. En effet, une telle position de l'axe du pédalier 40 confère au vélo un confort de pédalage optimum comme indiqué plus haut, l'axe du pédalier se situant au voisinage d'une distance optimale de 27 cm par rapport au sol.

Selon une autre caractéristique importante et illustrée aux figures 3B, 4B et 5B, le cadre 2 est adapté pour recevoir sans modification une transmission par chaîne multivitesse usuelle. Cette transmission comprend un plateau 41 tout à fait analogue au plateau de la transmission à courroie, une chaîne 63 à la place de la courroie 43, un ensemble de pignons arrière 65 et un dérailleur dont seul le galet supérieur 68 et le galet tendeur inférieur 69 sont indiqués schématiquement à la figure 3B.

Comme on peut le voir sur ces figures, la chaîne 63 passe alors de manière habituelle en entourant l'élément de base 32, son montage pouvant être réalisé aisément à l'aide d'un maillon rapide ou en dérivant un maillon. On notera que le brin aller 63a passe sous l'élément de base, comme cela est visible aux figures 3B et 4B, sans toucher à celui-ci.

La partie avant de l'élément de base 32, notamment la prolongation 18, est située intérieurement, c'est-à-dire à gauche dans le cas présent, par rapport au plateau 41 et donc du départ du brin aller 63a. Du fait de la direction descendante vers l'arrière de ce brin aller 63a, même pour la position le plus haute du galet tendeur 69, et grâce notamment au fait que la majeure portion 61 est rectiligne et forme un angle α, il n'y a pas d'interférence entre ce brin et l'élément de base. Il en est de même pour le plus petit développement, c'est-à-dire quand la chaîne est sur le pignon arrière 65 tout à gauche. Le galet tendeur 69 prend alors une position sensiblement plus haute mais sans reculer vraiment par rapport au support d'axe 33. Il n'y a pas d'interférence avec l'élément de base grâce à la portion complémentaire 62 qui est courbé et présente un angle β.

Le brin retour 63b de la chaîne est situé sensiblement à la même position que le brin retour 43B de la courroie et n'interfère donc pas avec le cadre 2.

Grâce à cette disposition, il est possible de réaliser à partir du même cadre des vélos à transmission par courroie et de préférence assistance électrique, des vélos multivitesse à dérailleur usuel, mais aussi des vélos combinant assistance électrique et à système multivitesse à dérailleur usuel. Au vu des figures 5a et 5b, on comprendra bien qu'un vélo combiné peut utiliser un moteur d'encombrement latéral moins important que le moteur 50 et/ou un nombre de pignons plus réduit que celui de l'ensemble 65. Ceci permet bien entendu de reprendre un plus grand nombre d'éléments communs pour ces différents types de vélos. En plus d'une économie d'échelle, cela augmente la souplesse de la production. En effet, les cadres 2 peuvent être commandés en grand nombre et importés sous forme de cadres nus pré-peints tels que représentés à la figure 2. La production des vélos finis peut alors être ajustée entre les différents types de vélos d'une gamme, simplement en choisissant les éléments à monter sur le modèle de cadre unique pour l'ensemble de la gamme.

Le mode de réalisation décrit ci-dessus n'est bien entendu pas limitatif. Des variations de géométrie sont possibles, en particulier en fonction du type d'utilisation prévue pour le vélo. La fabrication des différents éléments peut elle aussi être sensiblement différente et comporter plus ou moins de pièces initiales qui sont ensuite soudées ou reliées mécaniquement.

## Revendications

1. Cadre de vélo comprenant :
- un premier élément de cadre (10) s'étendant depuis une extrémité supérieure (10a) portant un boîtier de pivotement d'une roue avant (3) jusqu'à une extrémité inférieure (10b) ;
- un deuxième élément de cadre (20) s'étendant depuis une extrémité supérieure (20a) recevant un ensemble de selle (9) jusqu'à une extrémité inférieure (20b) solidaire de l'extrémité inférieure du premier élément de cadre ;
- une fourche (8) de roue arrière comprenant au moins un élément de base (32) s'étendant depuis l'extrémité inférieure (10b) du premier élément de cadre jusqu'à un support d'axe (33) d'une roue arrière et un hauban (36) s'étendant dudit support jusqu'au deuxième élément de cadre ;
un pédalier (40) présentant un axe de pédalier porté par le cadre et un plateau (41) d'entraînement agencé latéralement à l'extérieur par rapport aux premier et deuxième éléments de cadre; **caractérisé en ce que** le deuxième élément de cadre (20), l'élément de base (32) et le hauban (36) forment un ensemble rigide indémontable, **en ce que** ledit cadre est compatible avec une transmission à courroie et une transmission par chaîne usuelle, ladite transmission à courroie qui peut être montée sur le cadre, comprenant une courroie d'entraînement (43) et une roue arrière (7) entrainée par un pignon coaxial (45) pouvant être agencée intérieurement par rapport à la fourche de roue arrière,
la courroie d'entraînement (43) formant une boucle continue en prise avec le plateau et le pignon, la courroie (43) présentant un brin aller (43a) et un brin retour (43b) s'étendant tous deux au travers du triangle formé par le deuxième élément de cadre (20), l'élément de base (32) et le hauban (36),
et ladite transmission par chaîne qui peut être montée sur le même cadre, comprenant une roue arrière présentant des pignons multiples (65), un dérailleur à galet tendeur (69) et une chaîne (63) présentant un brin retour (63b) passant à travers le triangle de fourche (20, 32, 36) et un brin aller (63a) s'étendant sous l'élément de base (32) quelle que soit la position du dérailleur,
**en ce que** l'élément de base (32) présente une majeure portion (61) agencée sous une droite (D) s'étendant de l'extrémité inférieure du plateau (41) à l'extrémité inférieure du pignon (45), et **en ce que** l'axe du pédalier (40) est situé à une distance verticale de la face supérieure de l'élément de base (32) à l'aplomb de cet axe, ladite distance étant au plus légèrement supérieure au rayon du plateau (41).

2. Cadre de vélo selon la revendication précédente, dans lequel la majeure portion (61) de l'élément de base s'étend depuis une extrémité avant (32a) de celui-ci qui est reliée au cadre, sur une distance représentant 60 % à 80 % de la longueur totale développée dudit élément de base (32).

3. Cadre de vélo selon l'une des revendications précédentes, dans lequel la majeure portion (61) de l'élément de base est sensiblement rectiligne depuis l'extrémité avant (32a) de celui-ci et est complétée jusqu'à l'extrémité arrière (32b) dudit élément de base (32) par une portion complémentaire (62) courbe.

4. Cadre de vélo selon l'une des revendications précédentes, dans lequel la majeure portion (61) de l'élément de base s'étend dans un plan incliné d'un angle α compris entre 9° et 15° par rapport à l'horizontale, et de préférence d'environ 12°.

5. Cadre de vélo selon l'une des revendications précédentes, dans lequel l'élément de base (32) comprend une portion complémentaire (62) s'étendant depuis le support d'axe (33) de roue jusqu'à la majeure portion (61), qui présente des extrémités (32b, 32c) alignées sur une droite formant un angle β de 30° à 45° avec l'horizontale et de préférence d'environ 40°.

6. Cadre de vélo selon l'une des revendications précédentes, dans lequel l'élément de base (32) est relié à l'extrémité inférieure (10b) du premier élément de cadre, ladite extrémité étant située à une distance h du sol comprise entre 12 cm et 20 cm.

7. Cadre de vélo selon l'une des revendications précédentes, dans lequel l'axe du pédalier (40) est porté par un boîtier (42) solidaire du deuxième élément de cadre (20).

8. Cadre de vélo selon l'une des revendications précédentes, dans lequel la majeure portion (61) de l'élément de base (32) s'étend sensiblement parallèlement au brin aller (43a) de la courroie (43).

9. Cadre de vélo selon l'une des revendications précédentes, pour lequel la fourche arrière (8) est adaptée pour recevoir une roue présentant des pignons multiples (65), un dérailleur à galet tendeur (69) et une chaîne (63) présentant un brin retour (63b) passant à travers le triangle de fourche (20, 32, 36) et un brin aller (63a) s'étendant sous l'élément de base (32) quelle que soit la position du dérailleur.

## Patentansprüche

1. Fahrradrahmen, der Folgendes aufweist:
- ein erstes Rahmenelement (10), das sich von einem oberen Ende (10a), das ein Schwenkgehäuse eines Vorderrads (3) trägt, bis zu einem unteren Ende (10b) erstreckt,
- ein zweites Rahmenelement (20), das sich von einem oberen Ende (20a), das eine Sitzeinheit (9) aufnimmt, bis zu einem unteren Ende (20b), das fest mit dem unteren Ende des ersten Rahmenelements verbunden ist, erstreckt,
- eine hintere Radgabel (8), die wenigstens ein Basiselement (32), das sich von dem unteren Ende (10b) des ersten Rahmenelements bis zu einem Achsträger (33) eines hinteren Rads erstreckt und eine Verspannung (36) aufweist, die sich von dem Träger bis zu dem zweiten Rahmenelement erstreckt,
- ein Tretlager (40), das eine Tretlagerachse, die von dem Rahmen getragen wird, und eine Antriebsscheibe (41) aufweist, die seitlich außerhalb in Bezug zu dem ersten und dem zweiten Rahmenelement eingerichtet ist, **dadurch gekennzeichnet, dass** das zweite Rahmenelement (20), das Basiselement (32) und die Verspannung (36) eine nicht demontierbare starre Einheit bilden, und dass der Rahmen mit einer Riemenübertragung und einer herkömmlichen Kettenübertragung kompatibel ist, wobei die Riemenübertragung, die auf dem Rahmen montiert sein kann, einen Antriebsriemen (43) und ein hinteres Rad (7) aufweist, das von einem koaxialen Ritzel (45), das innerhalb in Bezug zu der hinteren Radgabel eingerichtet sein kann, angetrieben wird,
- wobei der Antriebsriemen (43) eine ununterbrochene Schleife im Eingriff mit der Scheibe und dem Ritzel bildet, wobei der Riemen (43) ein Vorlauftrum (43a) und ein Rücklauftrum (43b) aufweist, die sich beide durch das Dreieck erstrecken, das von dem zweiten Rahmenelement (20), dem Basiselement (32) und der Verspannung (36) gebildet wird,
- und wobei die Kettenübertragung, die auf demselben Rahmen montiert sein kann, ein hinteres Rad aufweist, das mehrere Ritzel (65), eine Kettenschaltung mit Spannscheibe (69) und eine Kette (63) aufweist, die ein Rücklauftrum (63b) aufweist, das durch das Gabeldreieck (20, 32, 36) verläuft, und ein Vorlauftrum (63a), das sich unter dem Basiselement (32) ungeachtet der Position der Kettenschaltung erstreckt,
- dass das Basiselement (32) einen Hauptteil (61) aufweist, der unter einer Geraden (D) eingerichtet ist, die sich von dem unteren Ende der Scheibe (41) zu dem unteren Ende des Ritzels (45) erstreckt, und dass die Achse des Tretlagers (40) in einer vertikalen Entfernung von der oberen Seite des Basiselements (32) senkrecht zu dieser Achse liegt, wobei die Entfernung höchstens leicht größer ist als der Radius der Scheibe (41).

2. Fahrradrahmen nach dem vorhergehenden Anspruch, bei dem sich der Hauptteil (61) des Basiselements von einem vorderen Ende (32a), das mit dem Rahmen verbunden ist, über eine Entfernung erstreckt, die 60 % bis 80 % der gesamten entwickelten Länge des Basiselements (32) darstellt.

3. Fahrradrahmen nach einem der vorhergehenden Ansprüche, bei dem sich der Hauptteil (61) des Basiselements im Wesentlichen geradlinig von dem vorderen Ende (32a) erstreckt und bis zu dem hinteren Ende (32b) des Basiselements (32) durch einen gebogenen komplementären Teil (62) vervollständigt ist.

4. Fahrradrahmen nach einem der vorhergehenden Ansprüche, bei dem sich der Hauptteil (61) des Basiselements in einer schrägen Ebene mit einem Winkel α zwischen 9° und 15° in Bezug zu der Horizontalen und vorzugsweise von etwa 12° erstreckt.

5. Fahrradrahmen nach einem der vorhergehenden Ansprüche, bei dem das Basiselement (32) einen komplementären Teil (62) aufweist, der sich von dem Radachsenträger (33) bis zu dem Hauptteil (61) erstreckt, der Enden (32b, 32c) aufweist, die auf einer Geraden ausgerichtet sind, die einen Winkel β von 30° bis 45° mit der Horizontalen und vorzugsweise von etwa 40° bildet.

6. Fahrradrahmen nach einem der vorhergehenden Ansprüche, bei dem das Basiselement (32) mit dem unteren Ende (10b) des ersten Rahmenelements verbunden ist, wobei sich das Ende in einer Entfernung h vom Boden zwischen 12 cm und 20 cm befindet.

7. Fahrradrahmen nach einem der vorhergehenden Ansprüche, bei dem die Achse des Tretlagers (40) von einem Gehäuse (42) getragen wird, das fest mit dem zweiten Rahmenelement (20) verbunden ist.

8. Fahrradrahmen nach einem der vorhergehenden Ansprüche, bei dem sich der Hauptteil (61) des Basiselements (32) im Wesentlichen parallel zu dem Vorlauftrum (43a) des Riemens (43) erstreckt.

9. Fahrradrahmen nach einem der vorhergehenden Ansprüche, bei dem die hintere Gabel (8) angepasst ist, um ein Rad aufzunehmen, das mehrere Ritzel (65), eine Kettenschaltung mit Spannscheibe (69) und eine Kette (63) aufweist, die ein Rücklauftrum (63b) aufweist, das durch das Gabeldreieck (20, 32, 36) verläuft, und ein Vorlauftrum (63a), das sich unter dem Basiselement (32) ungeachtet der Position der Kettenschaltung erstreckt.

## Claims

1. Bike frame comprising:
- a first frame element (10) extending from an upper end (10a) carrying a steering tube of a front wheel (3) to a lower end (10b);
- a second frame element (20) extending from an upper end (20a) receiving a seat unit (9) to a lower end (20b) rigidly fixed to the lower end of the first frame element;
- a rear wheel fork (8) comprising at least one chainstay element (32) extending from the lower end (10b) of the first frame element to a rear wheel spindle support (33) and a seat stay (36) extending from said support to the second frame element;
- a crankset (40) having a crank spindle borne by the frame and a driving chainring (41) arranged laterally outside with respect to the first and second frame elements, **characterized in that** the second frame element (20), the chainstay element (32) and the seat stay (36) form an irremovable stiff assembly, **in that** said frame is compatible with a belt transmission and an usual chain transmission, said belt transmission, which can be mounted on the frame, comprising
a drive belt (43) and a rear wheel (7) driven by a coaxial sprocket (45) arranged inside with respect to the rear wheel fork, the drive belt (43) forming a continuous loop engaged with the chainring and the sprocket,
the belt (43) having an outward strand (43a) and a return strand (43b) both extending through the triangle formed by the second frame element (20), the chainstay element (32) and the seat stay (36),
said chain transmission, which can be mounted on the same frame, comprising a rear wheel having multiple sprockets (65), a derailleur with an idler pulley (69) and a chain (63) having a return strand (63b) passing through the fork triangle (20, 32, 36) and an outward strand (63a) extending below the chainstay element (32) irrespective of the position of the derailleur,
**in that** the chainstay element (32) has a major portion (61) arranged below a straight line (D) extending from the lower end of the chainring (41) to the lower end of the sprocket (45),
and **in that** the axis of the crankset (40) is situated at a vertically measured distance from the upper face of the chainstay element (32), said distance being at most slightly greater than the radius of the chainring (41).

2. Bike frame according to the previous claim, in which the major portion (61) of the chainstay element extends from a front end (32a) of the latter which is connected to the frame, over a distance representing 60 % to 80 % of the total developed length of said chainstay element (32).

3. Bike frame according to one of the previous claims, in which the major portion (61) of the chainstay element is substantially straight from the front end (32a) of the latter and is completed to the rear end (32b) of said chainstay element (32) by a curved additional portion (62).

4. Bike frame according to one of the previous claims, in which the major portion (61) of the chainstay element extends in an inclined plane at an angle α comprised between 9° and 15° with respect to the horizontal, and preferably of approximately 12°.

5. Bike frame according to one of the previous claims, in which the chainstay element (32) comprises a additional portion (62) extending from the spindle support (33) to the major portion (61), which has ends (32b, 32c) aligned with a straight line forming an angle β of 30° to 45° with the horizontal, and preferably approximately 40°.

6. Bike frame according to one of the previous claims, in which the chainstay element (32) is connected to the lower end (10b) of the first frame element, said end being situated at a distance h from the ground comprised between 12 cm and 20 cm.

7. Bike frame according to one of the previous claims, in which the crankset (40) is borne by a housing (42) rigidly fixed to the second frame element (20).

8. Bike frame according to one of the previous claims, in which the major portion (61) of the chainstay element (32) extends substantially parallel to the outward strand (43a) of the belt (43).

9. Bike according to one of the previous claims, for which the rear fork (8) is suitable for receiving a wheel having multiple sprockets (65), a derailleur with an idler pulley (69) and a chain (63) having a return strand (63b) passing through the fork triangle (20, 32, 36) and an outward strand (63a) extending below the chainstay element (32) irrespective of the position of the derailleur.
